# EUROPEAN PATENT APPLICATION

(11) **EP 4 821 985 A1**
(43) Date of publication of application: **14.10.2026**
(21) Application number: 24900249.4
(22) Date of filing: 12.09.2024
(51) Int. Cl.: C08L 67/04, C08L 67/02, C08L 101/16

(54) **RESIN COMPOSITION AND MOLDED BODY**

(30) Priority: 07.12.2023 JP 2023206739
(71) Applicant: KANEKA CORPORATION, Osaka-shi, Osaka 530-8288 (JP)
(72) Inventor: SITI, Sarah, Osaka 566-0072 (DE)
(74) Representative: Vossius & Partner Patentanwälte Rechtsanwälte mbB
(86) International application number: PCT/JP2024/032685
(87) International publication number: WO 2025/120952

(57) **Abstract**

A resin composition contains a poly(3-hydroxyalkanoate) resin (A) and an aliphatic-aromatic polyester resin (B). The resin (A) includes: a copolymer (A1) of 3-hydroxybutyrate units and other hydroxyalkanoate units, wherein the proportion of the other hydroxyalkanoate units is from 5 to less than 24 mol%, the copolymer (A1) having a weight-average molecular weight of less than 70 × 10⁴; and a copolymer (A4) of 3-hydroxybutyrate units and other hydroxyalkanoate units, wherein the proportion of the other hydroxyalkanoate units is from 5 to less than 24 mol%, the copolymer (A4) having a weight-average molecular weight of 70 × 10⁴ or more. The proportion of the copolymer (A1) is from 25 to 65 wt%, the proportion of the copolymer (A4) is from 5 to 30 wt%, and the proportion of the resin (B) is from 5 to 30 wt%.

## Description

### Technical Field

The present invention relates to a resin composition containing a poly(3-hydroxyalkanoate) resin and a molded article of the resin composition.

### Background Art

In recent years, environmental problems caused by plastic waste have become an issue of significant concern. In particular, it has been found that a huge amount of plastics discarded into the sea or carried into the sea via rivers and the like are drifting in the ocean on a global scale. Such plastics, which retain their shapes for a long period of time, have been pointed out as having various harmful effects on ecosystems. Examples of plastics-induced problems include: so-called ghost fishing, in which plastics entangle or trap marine organisms; and feeding disorders from which marine organisms that have ingested plastics suffer due to the plastics remaining in their digestive organs.

There is also known a problematic phenomenon in which plastics are broken into microplastic particles by the action of ultraviolet rays or other factors, the microplastic particles then adsorb hazardous compounds present in the ocean, and marine organisms ingest the microplastic particles with the adsorbed compounds, thereby introducing hazardous substances into the food chain.

The use of biodegradable plastics is expected as a means for addressing the plastics-induced marine pollution described above. However, a report issued by the United Nations Environment Programme in 2015 states that plastics such as polylactic acid, which can be biodegraded through composting, are not expected to degrade quickly in actual marine environments having low temperatures, and therefore cannot serve as a countermeasure against marine pollution.

Under these circumstances, poly(3-hydroxyalkanoate) resins, which are biodegradable even in seawater, have attracted attention as materials that can provide a solution to the above-described problems.

Patent Literature 1 and Patent Literature 2 state that blending such a poly(3-hydroxyalkanoate) resin with an aliphatic-aromatic polyester resin, typified by polybutylene adipate terephthalate (PBAT), results in improved mechanical properties.

### Patent Literature

PTL 1: WO 2014/054278 A1
PTL 2: Japanese Laid-Open Patent Application Publication No. 2022-185793

### Summary of Invention

### Technical Problem

Blending a poly(3-hydroxyalkanoate) resin with an aliphatic-aromatic polyester resin can improve strength.

However, the strength improvement effect remains insufficient, and there is still room for improvement. In addition, although the resulting blend exhibits improved strength, the blend has been found to have insufficient heat resistance and be liable to deformation or cracking upon heating.

In view of the above circumstances, the present invention aims to provide: a resin composition containing a poly(3-hydroxyalkanoate) resin, the resin composition having high strength and being resistant to deformation and cracking upon heating; and a molded article formed from the resin composition.

### Solution to Problem

As a result of intensive studies aimed at solving the above problem, the present inventors have found that, by using a specific proportion of an aliphatic-aromatic polyester resin in combination with specific proportions of two poly(3-hydroxyalkanoate) resins having different weight-average molecular weights, it is possible to obtain a molded article having high strength and being resistant to deformation and cracking upon heating. Based on this finding, the inventors have completed the present invention.

Specifically, the present invention relates to a resin composition containing polyester resin components, wherein
the polyester resin components include a poly(3-hydroxyalkanoate) resin (A) and an aliphatic-aromatic polyester resin (B),
the poly(3-hydroxyalkanoate) resin (A) includes:
   a copolymer (A1) of 3-hydroxybutyrate units and other hydroxyalkanoate units, wherein a proportion of the other hydroxyalkanoate units in a total amount of the 3-hydroxybutyrate units and the other hydroxyalkanoate units is from 5 to less than 24 mol%, the copolymer (A1) having a weight-average molecular weight of less than 70 × 10⁴; and
   a copolymer (A4) of 3-hydroxybutyrate units and other hydroxyalkanoate units, wherein a proportion of the other hydroxyalkanoate units in a total amount of the 3-hydroxybutyrate units and the other hydroxyalkanoate units is from 5 to less than 24 mol%, the copolymer (A4) having a weight-average molecular weight of 70 × 10⁴ or more, and
   in a total amount of the poly(3-hydroxyalkanoate) resin (A) and the aliphatic-aromatic polyester resin (B), a proportion of the copolymer (A1) is from 25 to 65 wt%, a proportion of the copolymer (A4) is from 5 to 30 wt%, and a proportion of the aliphatic-aromatic polyester resin (B) is from 5 to 30 wt%.

The present invention also relates to a molded article containing the resin composition.

### Advantageous Effects of Invention

The present invention can provide: a resin composition containing a poly(3-hydroxyalkanoate) resin, the resin composition having high strength and being resistant to deformation and cracking upon heating; and a molded article formed from the resin composition.

A preferred aspect of the present invention can provide a practically favorable resin composition and molded article that have a good balance between strength and toughness and are capable of deforming over a wide range while maintaining stiffness.

### Brief Description of Drawings

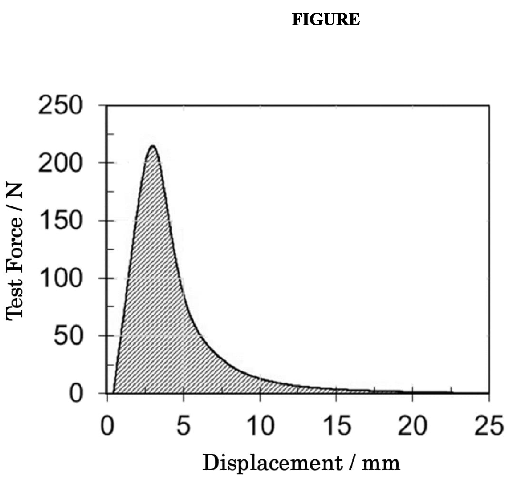

FIG. 1 is a graph obtained in a flexural test for measuring fracture energy, in which the ordinate represents test force and the abscissa represents displacement.

### Description of Embodiments

Hereinafter, embodiments of the present invention will be described. The present invention is not limited to the embodiments described below.

One embodiment of the present invention is a resin composition containing polyester resin components. The resin composition is suitable for use in the production of molded articles. The polyester resin components include at least a poly(3-hydroxyalkanoate) resin (A) and an aliphatic-aromatic polyester resin (B).

### (Poly(3-Hydroxyalkanoate) Resin (A))

The poly(3-hydroxyalkanoate) resin is a polymer having 3-hydroxyalkanoate units. Specifically, the poly(3-hydroxyalkanoate) resin is preferably a polymer containing units represented by the following formula (1).

[-CHR-CH₂-CO-O-] (1)

In the formula (1), R is an alkyl group represented by CₚH₂ₚ₊₁, where p is an integer from 1 to 15. Examples of R include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

The poly(3-hydroxyalkanoate) resin is particularly preferably a microbially produced poly(3-hydroxyalkanoate) resin. In such a microbially produced poly(3-hydroxyalkanoate) resin, all 3-hydroxyalkanoate units are contained as (R)-3-hydroxyalkanoate units.

The poly(3-hydroxyalkanoate) resin preferably contains 50 mol% or more, more preferably 60 mol% or more, even more preferably 70 mol% or more, of 3-hydroxyalkanoate units (in particular, the units represented by the formula (1)) based on the total structural units. The poly(3-hydroxyalkanoate) resin may contain only 3-hydroxyalkanoate units as polymer structural units, or may contain other units (such as 4-hydroxyalkanoate units) in addition to one type or two or more types of 3-hydroxyalkanoate units.

The poly(3-hydroxyalkanoate) resin may be a homopolymer or a copolymer containing 3-hydroxybutyrate (hereinafter also referred to as 3HB) units. In particular, all of the 3-hydroxybutyrate units are preferably (R)-3-hydroxybutyrate units. The poly(3-hydroxyalkanoate) resin is preferably a copolymer of 3-hydroxybutyrate units and other hydroxyalkanoate units.

Specific examples of the poly(3-hydroxyalkanoate) resin include poly(3-hydroxybutyrate), poly(3-hydroxybutyrate-co-3-hydroxypropionate), poly(3-hydroxybutyrate-co-3-hydroxyvalerate) abbreviated as P3HB3HV, poly(3-hydroxybutyrate-co-3-hydroxyvalerate-co-3-hydroxyhexanoate), poly(3-hydroxybutyrate-co-3-hydroxyhexanoate) abbreviated as P3HB3HH, poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as P3HB4HB. In particular, from the standpoint of molded article productivity and the mechanical properties of the resulting molded article, poly(3-hydroxybutyrate-co-3-hydroxyhexanoate) or poly(3-hydroxybutyrate-co-4-hydroxybutyrate) is preferred, and poly(3-hydroxybutyrate-co-3-hydroxyhexanoate) is more preferred.

In the present embodiment, the poly(3-hydroxyalkanoate) resin (A) includes at least a combination of two poly(3-hydroxyalkanoate) resins having different weight-average molecular weights, in order to ensure fluidity during melt processing, enhance the strength of the resulting molded article, and achieve resistance to deformation and cracking upon heating.

Specifically, the poly(3-hydroxyalkanoate) resin (A) includes at least the following two copolymers.

A copolymer (A1) of 3-hydroxybutyrate units and other hydroxyalkanoate units, wherein the proportion of the other hydroxyalkanoate units in the total amount of the 3-hydroxybutyrate units and the other hydroxyalkanoate units is from 5 to less than 24 mol%, the copolymer (A1) having a weight-average molecular weight of less than 70 × 10⁴.

A copolymer (A4) of 3-hydroxybutyrate units and other hydroxyalkanoate units, wherein the proportion of the other hydroxyalkanoate units in the total amount of the 3-hydroxybutyrate units and the other hydroxyalkanoate units is from 5 to less than 24 mol%, the copolymer (A4) having a weight-average molecular weight of 70 × 10⁴ or more.

A copolymer of 3-hydroxybutyrate units and other hydroxyalkanoate units generally exhibits lower crystallinity as the proportion of the other hydroxyalkanoate units increases. Both the copolymers (A1) and (A4) listed above have a moderate level of crystallinity, since the proportion of the other hydroxyalkanoate units in each copolymer is from 5 to less than 24 mol%. By using the copolymer (A1) having a relatively low molecular weight and the copolymer (A4) having a relatively high molecular weight as copolymers having a moderate level of crystallinity, it is possible to enhance the strength of the resulting molded article and to achieve resistance to deformation and cracking upon heating while ensuring fluidity during melt processing.

The weight-average molecular weight of the copolymer (A1) is less than 70 × 10⁴. The use of such a copolymer having a relatively low molecular weight ensures fluidity during melt processing. The molecular weight is more preferably 60 × 10⁴ or less and even more preferably 50 × 10⁴ or less. The lower limit of the molecular weight is not limited to a particular value. From the standpoint of the strength of the molded article, the molecular weight is preferably 20 × 10⁴ or more and more preferably 30 × 10⁴ or more.

In the copolymer (A1), the proportion of the other hydroxyalkanoate units in the total amount of the 3-hydroxybutyrate units and the other hydroxyalkanoate units is from 5 to less than 24 mol%. The proportion is preferably from 5 to 20 mol%, more preferably from 5 to 15 mol%, even more preferably from 5 to 10 mol%, and particularly preferably from 5 to 7 mol%.

Any of the copolymers previously mentioned may be used as the copolymer (A1). Poly(3-hydroxybutyrate-co-3-hydroxyhexanoate) or poly(3-hydroxybutyrate-co-4-hydroxybutyrate) is preferred, and poly(3-hydroxybutyrate-co-3-hydroxyhexanoate) is particularly preferred.

In the present embodiment, the proportion of the copolymer (A1) in the total amount of the poly(3-hydroxyalkanoate) resin (A) and the aliphatic-aromatic polyester resin (B) is set in the range of 25 to 65 wt%. By setting the proportion of the copolymer (A1) to 25 wt% or more, fluidity during melt processing can be ensured. By setting the proportion to 65 wt% or less, the strength of the resulting molded article can be enhanced, and resistance to deformation and cracking upon heating can be achieved. The proportion is preferably at least 30 wt%, more preferably at least 35 wt%, and even more preferably at least 40 wt%. The proportion is preferably up to 60 wt%.

In contrast, the weight-average molecular weight of the copolymer (A4) is 70 × 10⁴ or more. The use of such a copolymer having a relatively high molecular weight in combination with the aliphatic-aromatic polyester resin (B) described later makes it possible to enhance the strength of the resulting molded article and to achieve resistance to deformation and cracking upon heating. The molecular weight is preferably 75 × 10⁴ or more, more preferably 80 × 10⁴ or more, even more preferably 90 × 10⁴ or more, and particularly preferably 100 × 10⁴ or more. The upper limit of the molecular weight is not limited to a particular value. From the standpoint of productivity, the molecular weight is preferably 250 × 10⁴ or less, more preferably 200 × 10⁴ or less, and even more preferably 150 × 10⁴ or less.

The difference between the weight-average molecular weights of the copolymers (A1) and (A4) is not limited to a particular range. In order for the copolymers (A1) and (A4) to reliably exhibit their respective effects, the difference is preferably 10 × 10⁴ or more, more preferably 20 × 10⁴ or more, and particularly preferably 30 × 10⁴ or more.

In the copolymer (A4), the proportion of the other hydroxyalkanoate units in the total amount of the 3-hydroxybutyrate units and the other hydroxyalkanoate units is from 5 to less than 24 mol%. The proportion is preferably from 5 to 20 mol%, more preferably from 6 to 18 mol%, even more preferably from 7 to 15 mol%, and particularly preferably from 8 to 13 mol%.

Any of the copolymers previously mentioned may be used as the copolymer (A4). Poly(3-hydroxybutyrate-co-3-hydroxyhexanoate) or poly(3-hydroxybutyrate-co-4-hydroxybutyrate) is preferred, and poly(3-hydroxybutyrate-co-3-hydroxyhexanoate) is particularly preferred.

In the present embodiment, the proportion of the copolymer (A4) in the total amount of the poly(3-hydroxyalkanoate) resin (A) and the aliphatic-aromatic polyester resin (B) is set in the range of 5 to 30 wt%. By setting the proportion of the copolymer (A4) to 5 wt% or more, the strength of the resulting molded article can be enhanced, and resistance to deformation and cracking upon heating can be achieved. By setting the proportion to 30 wt% or less, fluidity during melt processing can be ensured. The proportion is preferably up to 25 wt% and more preferably up to 20 wt%.

The poly(3-hydroxyalkanoate) resin (A) may consist solely of the copolymers (A1) and (A4). However, in order to improve the elongation of the molded article and achieve a good balance between strength and toughness, the poly(3-hydroxyalkanoate) resin (A) may further contain a poly(3-hydroxyalkanoate) resin in which the proportions of constituent monomers differ from those in the copolymers (A1) and (A4).

Specifically, the poly(3-hydroxyalkanoate) resin (A) preferably further includes the following two copolymers.

A copolymer (A2) of 3-hydroxybutyrate units and other hydroxyalkanoate units, wherein the proportion of the other hydroxyalkanoate units in the total amount of the 3-hydroxybutyrate units and the other hydroxyalkanoate units is from 1 to less than 5 mol%.

A copolymer (A3) of 3-hydroxybutyrate units and other hydroxyalkanoate units, wherein the proportion of the other hydroxyalkanoate units in the total amount of the 3-hydroxybutyrate units and the other hydroxyalkanoate units is 24 mol% or more.

The copolymer (A2) is a high-crystallinity poly(3-hydroxyalkanoate) resin because the proportion of the other hydroxyalkanoate units is low, whereas the copolymer (A3) is a low-crystallinity poly(3-hydroxyalkanoate) resin. High-crystallinity poly(3-hydroxyalkanoate) resins exhibit good strength but have low toughness. Low-crystallinity poly(3-hydroxyalkanoate) resins exhibit good toughness but have insufficient strength.

The use of these copolymers (A2) and (A3) in combination with the copolymers (A1) and (A4) makes it possible not only to enhance the strength of the resulting molded article and achieve resistance to deformation and cracking upon heating, but also to improve the elongation of the molded article, thereby enabling the molded article to exhibit a good balance between strength and toughness. Generally, poly(3-hydroxyalkanoate) resins tend to exhibit reduced strength as elongation increases. In contrast, according to the present aspect, the strength can be maintained without a substantial decrease even when elongation is improved.

In the copolymer (A2), the proportion of the other hydroxyalkanoate units in the total amount of the 3-hydroxybutyrate units and the other hydroxyalkanoate units is from 1 to less than 5 mol%. From the standpoint of the balance between strength and toughness and productivity, the proportion is preferably at least 2 mol%. The proportion may be up to 4 mol%.

Any of the copolymers previously mentioned may be used as the copolymer (A2). Poly(3-hydroxybutyrate-co-3-hydroxyhexanoate) or poly(3-hydroxybutyrate-co-4-hydroxybutyrate) is preferred, and poly(3-hydroxybutyrate-co-3-hydroxyhexanoate) is more preferred.

In the copolymer (A3), the proportion of the other hydroxyalkanoate units in the total amount of the 3-hydroxybutyrate units and the other hydroxyalkanoate units is 24 mol% or more. From the standpoint of the balance between strength and toughness, the proportion is preferably at least 26 mol% and more preferably at least 28 mol%. From the standpoint of productivity in producing the copolymer (A3), the proportion is preferably up to 99 mol%, more preferably up to 50 mol%, even more preferably up to 40 mol%, and particularly preferably up to 30 mol%.

Any of the copolymers previously mentioned may be used as the copolymer (A3). Poly(3-hydroxybutyrate-co-3-hydroxyhexanoate) or poly(3-hydroxybutyrate-co-4-hydroxybutyrate) is preferred, and poly(3-hydroxybutyrate-co-3-hydroxyhexanoate) is more preferred.

The weight-average molecular weight of each of the copolymers (A2) and (A3) is not limited to a particular range, and may be set as appropriate in view of the weight-average molecular weight of the total poly(3-hydroxyalkanoate) resin (A). In order to ensure both good mechanical properties of the molded article and good productivity in producing the molded article, the weight-average molecular weight of the copolymer (A2) or (A3) is preferably from 20 × 10⁴ to 200 × 10⁴, more preferably from 25 × 10⁴ to 150 × 10⁴, and particularly preferably from 30 × 10⁴ to 100 × 10⁴. To reliably achieve the effect associated with the use of the copolymer (A4) described above, the weight-average molecular weight of each of the copolymers (A2) and (A3) is preferably less than 70 × 10⁴.

In the present embodiment, the total proportion of the copolymers (A2) and (A3) in the total amount of the poly(3-hydroxyalkanoate) resin (A) and the aliphatic-aromatic polyester resin (B) may be set as appropriate. In order to improve the elongation of the molded article and achieve a good balance between strength and toughness, the total proportion is preferably set in the range of 15 to 55 wt%. By setting the total proportion to 15 wt% or more, the toughness of the molded article can be enhanced. By setting the total proportion to 55 wt% or less, the strength of the molded article can be enhanced. The total proportion is preferably at least 20 wt% and more preferably at least 25 wt%. The total proportion is preferably up to 50 wt%, more preferably up to 45 wt%, and even more preferably up to 40 wt%.

The proportions in which the copolymers (A2) and (A3) are used are not limited to particular ranges. From the standpoint of the balance between strength and toughness and productivity, it is preferable that the proportion of the copolymer (A2) in the total amount of the copolymers (A2) and (A3) be 35 wt% or more and that the proportion of the copolymer (A3) be 65 wt% or less. More preferably, the proportion of the copolymer (A2) is 40 wt% or more, and the proportion of the copolymer (A3) is 60 wt% or less. Preferably, the proportion of the copolymer (A2) is 75 wt% or less, and the proportion of the copolymer (A3) is 25 wt% or more. More preferably, the proportion of the copolymer (A2) is 65 wt% or less, and the proportion of the copolymer (A3) is 35 wt% or more.

The average ratio between the 3-hydroxybutyrate units and the other hydroxyalkanoate units (3-hydroxybutyrate units/other hydroxyalkanoate units) in the total monomer units constituting the poly(3-hydroxyalkanoate) resin (A) is preferably from 98/2 to 65/35 (mol%/mol%), more preferably from 96/4 to 75/25 (mol%/mol%), even more preferably from 95/5 to 80/20 (mol%/mol%), and particularly preferably from 96/6 to 85/15 (mol%/mol%) in order to ensure both good mechanical properties of the molded article and good productivity in producing the molded article.

The average ratio between different monomer units in the total monomer units constituting the poly(3-hydroxyalkanoate) resin (A) or each copolymer can be determined by a method known to those skilled in the art, such as the method described in paragraph [0047] of WO 2013/147139 A1. The average ratio between different monomer units in the poly(3-hydroxyalkanoate) resin (A) refers to the molar ratio between the different monomer units in the total monomer units of the total poly(3-hydroxyalkanoate) resin (A), in particular the molar ratio between the different monomer units contained in the total mixture of the plurality of poly(3-hydroxyalkanoate) resins constituting the poly(3-hydroxyalkanoate) resin (A).

The weight-average molecular weight of the total poly(3-hydroxyalkanoate) resin (A) is not limited to a particular range. In order to ensure both good mechanical properties of the molded article and good productivity in producing the molded article, the weight-average molecular weight is preferably from 5 × 10⁴ to 300 × 10⁴, more preferably from 20 × 10⁴ to 200 × 10⁴, even more preferably from 25 × 10⁴ to 150 × 10⁴, and particularly preferably from 30 × 10⁴ to 80 × 10⁴.

The weight-average molecular weight of the poly(3-hydroxyalkanoate) resin (A) or each copolymer can be measured as a polystyrene-equivalent molecular weight by gel permeation chromatography (HPLC GPC system manufactured by Shimadzu Corporation) using a chloroform solution of the resin (A) or the copolymer. The columns used in the gel permeation chromatography may be any columns suitable for weight-average molecular weight measurement.

The poly(3-hydroxyalkanoate) resin (A) or each copolymer is preferably not crosslinked using a crosslinking agent such as an organic peroxide; that is, the resin (A) or the copolymer preferably does not have a crosslinked structure.

The method used to produce poly(3-hydroxyalkanoate) resins is not limited to a particular technique, and may be a production method using chemical synthesis or a microbial production method. A microbial production method is more preferred. The microbial production method used can be any known method. Known examples of bacteria that produce copolymers of 3-hydroxybutyrate with other hydroxyalkanoates include *Aeromonas caviae,* which is a P3HB3HV- and P3HB3HH-producing bacterium, and *Alcaligenes eutrophus,* which is a P3HB4HB-producing bacterium. In particular, in order to increase P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is more preferred. Such a microorganism is cultured under suitable conditions so that P3HB3HH is accumulated in the microbial cells, and the microbial cells accumulating P3HB3HH are used. Instead of the aforementioned microorganisms, a genetically modified microorganism incorporating any suitable poly(3-hydroxyalkanoate) resin synthesis-related gene may be used depending on the poly(3-hydroxyalkanoate) resin to be produced. The culture conditions, including the type of the substrate, may also be optimized depending on the poly(3-hydroxyalkanoate) resin to be produced.

### (Aliphatic-Aromatic Polyester Resin (B))

The resin composition according to the present embodiment contains the aliphatic-aromatic polyester resin (B) in addition to the poly(3-hydroxyalkanoate) resin (A). The use of the aliphatic-aromatic polyester resin (B) in combination with the copolymer (A4) having a high molecular weight makes it possible to enhance the strength of the resulting molded article and achieve resistance to deformation and cracking upon heating.

An aliphatic-aromatic polyester resin is a polyester resin composed of one or more types of dicarboxylic acid units selected from the group consisting of aliphatic dicarboxylic acid units and aromatic dicarboxylic acid units, and one or more types of diol units selected from the group consisting of aliphatic diol units and aromatic diol units, the polyester resin containing both aliphatic units and aromatic units.

Examples of such aliphatic-aromatic polyester resins include polybutylene adipate terephthalate resins, polybutylene sebacate terephthalate resins, and polybutylene succinate terephthalate resins. In particular, polybutylene adipate terephthalate resins (PBAT) are preferred.

Polybutylene adipate terephthalate (PBAT) resins are random copolymers of 1,4-butanediol, adipic acid, and terephthalic acid. Among these, a PBAT as described, for example, in Japanese Laid-Open Patent Application Publication (Translation of PCT Application) No. H10-508640 is preferred. Such a PBAT is obtained by the reaction of: (a) a mixture composed primarily of 35 to 95 mol% of adipic acid, its ester-forming derivative, or a mixture thereof and 5 to 65 mol% of terephthalic acid, its ester-forming derivative, or a mixture thereof (the sum of the molar percentages being 100 mol%); and (b) a mixture containing butanediol (the molar ratio of the mixture (a) to the mixture (b) being from 0.4:1 to 1.5:1). Examples of commercially available PBATs include "Ecoflex^{™}" manufactured by BASF.

In the present embodiment, the proportion of the aliphatic-aromatic polyester resin (B) in the total amount of the poly(3-hydroxyalkanoate) resin (A) and the aliphatic-aromatic polyester resin (B) is set in the range of 5 to 30 wt%. By setting the proportion of the aliphatic-aromatic polyester resin (B) in the range of 5 to 30 wt%, the strength of the resulting molded article can be enhanced, and resistance to deformation and cracking upon heating can be achieved. The proportion is preferably at least 8 wt% and more preferably at least 10 wt%. The proportion is preferably up to 25 wt% and more preferably up to 20 wt%.

### (Additional Resin)

The resin composition according to the present embodiment may contain an additional polyester resin other than the poly(3-hydroxyalkanoate) resin (A) and the aliphatic-aromatic polyester resin (B), to the extent that the additional polyester resin does not diminish the effects of the invention. Examples of such additional polyester resins include aliphatic polyester resins such as polybutylene succinate adipate, polybutylene succinate, polycaprolactone, and polylactic acid. The resin composition may contain only one additional polyester resin or may contain two or more additional polyester resins.

The amount of the additional polyester resin is not limited to a particular range, but is preferably 30 parts by weight or less, more preferably 20 parts by weight or less, even more preferably 10 parts by weight or less, and particularly preferably 5 parts by weight or less per 100 parts by weight of the total amount of the poly(3-hydroxyalkanoate) resin (A) and the aliphatic-aromatic polyester resin (B). The amount of the additional polyester resin may be 1 part by weight or less. The lower limit of the amount of the additional polyester resin is not limited to a particular value, and may be 0 parts by weight.

The resin composition according to the present embodiment may contain a resin other than polyester resins, but preferably contains polyester resins as the main resin components. The proportion of polyester resins in the total resin components contained in the resin composition according to the present embodiment is preferably from 50 to 100 wt%, more preferably from 70 to 100 wt%, even more preferably from 80 to 100 wt%, and still more preferably from 90 to 100 wt%.

### (Additives)

The resin composition according to the present embodiment may contain additives, to the extent that the additives do not diminish the effects of the invention. Examples of such additives include nucleating agents, lubricants, plasticizers, antistatic agents, flame retardants, conductive additives, heat-insulating agents, crosslinking agents, antioxidants, ultraviolet absorbers, colorants, inorganic fillers, organic fillers, and hydrolysis inhibitors, and any of these additives may be used depending on the intended purpose. In particular, biodegradable additives are preferred.

Examples of inorganic fillers include minerals containing layered silicates as main components, and such minerals are preferably used in order to enhance heat resistance or improve processability.

In particular, one or more inorganic fillers selected from the group consisting of smectite, mica, talc, pyrophyllite, vermiculite, chlorite, kaolinite, and serpentine are preferred in order to reliably improve processability. From the standpoint of utility, mica, talc, and kaolinite are preferred, and talc is particularly preferred.

Examples of the mica include wet-ground mica and dry-ground mica. Specific examples include mica manufactured by Yamaguchi Mica Co., Ltd. or Keiwa Rozai Co., Ltd.

Examples of the talc include general-purpose talc and surface-treated talc. Specific examples include "MICRO ACE^{™}" manufactured by Nippon Talc Co., Ltd., "Talcum powder^{™}" manufactured by Hayashi Kasei Co., Ltd., and talc manufactured by Takehara Kagaku Kogyo Co., Ltd. or Maruo Calcium Co., Ltd.

Examples of the kaolinite include dry kaolin, calcined kaolin, and wet kaolin. Specific examples include "TRANSLINK^{™}", "ASP^{™}", "SANTINTONE^{™}", and "ULTREX^{™}" manufactured by Hayashi Kasei Co., Ltd., and kaolinite manufactured by Keiwa Rozai Co., Ltd.

When such an inorganic filler is used, the amount of the inorganic filler is preferably from 5 to 30 parts by weight per 100 parts by weight of the total amount of the poly(3-hydroxyalkanoate) resin (A) and the aliphatic-aromatic polyester resin (B). When the amount of the inorganic filler is 5 parts by weight or more, the solidification properties of the resins are improved, and the resin composition tends to exhibit good moldability. When the amount of the inorganic filler is 30 parts by weight or less, the resin composition has a suitable melt viscosity and tends to exhibit good moldability. The amount is preferably at least 7 parts by weight and more preferably at least 10 parts by weight. The amount is preferably up to 27 parts by weight, more preferably up to 25 parts by weight, and even more preferably up to 20 parts by weight.

Examples of nucleating agents include pentaerythritol, orotic acid, aspartame, cyanuric acid, glycine, zinc phenylphosphonate, and boron nitride. Among these, pentaerythritol is preferred because it is particularly effective in accelerating crystallization of the polyester resin components. The amount of the nucleating agent used is not limited to a particular range, but is preferably from 0.1 to 5 parts by weight, more preferably from 0.5 to 3 parts by weight, and even more preferably from 0.7 to 1.5 parts by weight per 100 parts by weight of the total amount of the polyester resin components. One nucleating agent may be used, or two or more nucleating agents may be used. The proportions of the nucleating agents used may be adjusted as appropriate depending on the intended purpose.

Examples of lubricants include behenamide, oleamide, erucamide, stearamide, palmitamide, N-stearyl behenamide, N-stearyl erucamide, ethylene bis(stearamide), ethylene bis(oleamide), ethylene bis(erucamide), ethylene bis(lauramide), ethylene bis(capramide), p-phenylene bis(stearamide), and a polycondensation product of ethylenediamine, stearic acid, and sebacic acid. Among these, behenamide and erucamide are preferred because they are particularly effective in lubricating the polyester resin components. The amount of the lubricant used is not limited to a particular range, but is preferably from 0.01 to 5 parts by weight, more preferably from 0.05 to 3 parts by weight, and even more preferably from 0.1 to 1.5 parts by weight per 100 parts by weight of the total amount of the polyester resin components. One lubricant may be used, or two or more lubricants may be used. The proportions of the lubricants used may be adjusted as appropriate depending on the intended purpose.

Examples of plasticizers include glycerin ester compounds, citric ester compounds, sebacic ester compounds, adipic ester compounds, polyether ester compounds, benzoic ester compounds, phthalic ester compounds, isosorbide ester compounds, polycaprolactone compounds, and dibasic ester compounds. Among these, glycerin ester compounds, citric ester compounds, sebacic ester compounds, and dibasic ester compounds are preferred because they are particularly effective in plasticizing the polyester resin components. Examples of glycerin ester compounds include glycerin diacetomonolaurate. Examples of citric ester compounds include tributyl acetylcitrate. Examples of sebacic ester compounds include dibutyl sebacate. Examples of dibasic ester compounds include benzyl methyl diethylene glycol adipate. The amount of the plasticizer used is not limited to a particular range, but is preferably from 1 to 20 parts by weight, more preferably from 2 to 15 parts by weight, and even more preferably from 3 to 10 parts by weight per 100 parts by weight of the polyester resin components. One plasticizer may be used, or two or more plasticizers may be used. The proportions of the plasticizers used may be adjusted as appropriate depending on the intended purpose.

The resin composition according to the present embodiment preferably exhibits good fluidity during melt processing. From this standpoint, the resin composition preferably exhibits a melt flow rate, as measured at 165 °C, of 3 to 10 g/10 min, more preferably 4 to 8 g/10 min. The melt flow rate can be measured by the method described in Examples below.

The resin composition according to the present embodiment has high strength and can therefore be used to form a molded article having good usability. Fracture energy measured in accordance with ISO 178-A can be used as an indicator of good usability. Specifically, the fracture energy of the resin composition according to the present embodiment is preferably 0.50 J or more and more preferably 0.76 J or more. Acrylonitrile/butadiene/styrene resin (ABS), which is a general-purpose resin known to have high strength, exhibits a fracture energy of 0.76 J. The fracture energy is even more preferably 0.8 J or more, still more preferably 0.9 J or more, and particularly preferably 1.0 J or more. The fracture energy can be measured by the method described in Examples below.

The resin composition according to the present embodiment has high toughness, and a molded article formed from the composition can therefore avoid deformation or cracking during use. Elongation at break measured in accordance with ISO 527-1 and ISO 527-2 can be used as an indicator of high toughness. Specifically, the elongation at break of the resin composition according to the present embodiment is preferably 80% or more, more preferably 90% or more, and even more preferably 100% or more. The upper limit of the elongation at break is not limited to a particular value. For example, the elongation at break may be 300% or less or 200% or less. The elongation at break can be measured by the method described in Examples below.

### (Method for Producing Resin Composition)

The resin composition according to the present embodiment may be produced by melting and kneading the components. After the melting and kneading, the resin composition may be processed into pellets or may be directly used, without pelletizing, to produce a molded article other than pellets. The production method is described in detail below.

First, the polyester resin components, together with optionally added additives, are melted and kneaded using an extruder, a kneader, a Banbury mixer, or a roll mill to prepare a resin composition. The resin composition may be extruded into a strand, and the strand may then be cut into pellets having a shape such as a circular cylinder, an elliptical cylinder, a sphere, a cube, or a rectangular parallelepiped. The produced pellets are desirably fully dried at 40 to 80 °C to remove moisture before they are subjected to the subsequent molding step.

The temperature during the melting and kneading cannot be specifically defined, as it depends on factors such as the melting points and melt viscosities of the resins used. The resin temperature of the melt-kneaded material at the die exit is preferably from 135 to 200 °C, more preferably from 140 to 195 °C, even more preferably from 145 to 190 °C, and particularly preferably from 150 to 185 °C. When the resin temperature of the melt-kneaded material is 135 °C or higher, the polyester resin components can be melted uniformly. When the resin temperature is 200 °C or lower, thermal decomposition of the polyester resin components can be avoided.

The resin composition according to the present embodiment can be used to produce a molded article through melting and kneading followed by a molding step.

Examples of molding methods include, but are not limited to, injection molding, extrusion molding, blow molding, and calender molding. In particular, injection molding is suitable for use.

Specific examples of molded articles, particularly injection-molded articles, that can be formed from the resin composition according to the present embodiment include beverage extraction capsules such as coffee capsules, three-dimensional toys, cutlery, and cups.

The beverage extraction capsule is a type of container that holds a beverage material such as coffee or tea leaves. The internal cavity of the capsule is filled with the beverage material. The beverage is extracted from the capsule by injecting pressurized hot water into the capsule. For example, such a capsule is disclosed in European Patent No. 1792850.

The resin composition according to the present embodiment is resistant to deformation and cracking upon heating and is therefore suitable for forming the beverage extraction capsule described above. Since the beverage extraction capsule formed from the resin composition according to the present embodiment resists deformation or cracking during beverage extraction, the capsule can exhibit good beverage extraction performance without leakage of the beverage material.

The beverage extraction capsule can be produced by molding the resin composition using a known molding method, particularly injection molding.

Injection molding is a method in which a molded article is obtained by heating and melting a resin composition, injecting the molten resin composition into a mold, cooling and solidifying the resin composition in the mold, and subsequently opening the mold to release the molded article from the mold. The injection molding technique used may be any injection molding technique commonly used for molding thermoplastic resins. Other examples include injection blow molding, gas-assisted injection molding, and injection compression molding. In-mold injection molding, gas pressure injection molding, two-color molding, sandwich molding, push-pull injection molding, or SCORIM can also be used. Injection molding techniques that can be used are not limited to those mentioned above.

The temperature during cooling of the injected resin composition in the mold can be selected as appropriate by those skilled in the art. The temperature is preferably from 20 to 70 °C, more preferably from 25 to 60 °C, even more preferably from 30 to 50 °C, and particularly preferably from 35 to 45 °C.

Since the resin composition or molded article according to the present embodiment contains poly(3-hydroxyalkanoate) resins as main components, the resin composition or molded article exhibits good degradability in seawater, and can therefore serve as a solution to environmental problems caused by plastics discarded in the ocean.

In the following items, preferred aspects of the present disclosure are listed. The present invention is not limited to the following items.

### [Item 1]

A resin composition containing polyester resin components, wherein
the polyester resin components include a poly(3-hydroxyalkanoate) resin (A) and an aliphatic-aromatic polyester resin (B),
the poly(3-hydroxyalkanoate) resin (A) includes:
   a copolymer (A1) of 3-hydroxybutyrate units and other hydroxyalkanoate units, wherein a proportion of the other hydroxyalkanoate units in a total amount of the 3-hydroxybutyrate units and the other hydroxyalkanoate units is from 5 to less than 24 mol%, the copolymer (A1) having a weight-average molecular weight of less than 70 × 10⁴; and
   a copolymer (A4) of 3-hydroxybutyrate units and other hydroxyalkanoate units, wherein a proportion of the other hydroxyalkanoate units in a total amount of the 3-hydroxybutyrate units and the other hydroxyalkanoate units is from 5 to less than 24 mol%, the copolymer (A4) having a weight-average molecular weight of 70 × 10⁴ or more, and
in a total amount of the poly(3-hydroxyalkanoate) resin (A) and the aliphatic-aromatic polyester resin (B), a proportion of the copolymer (A1) is from 25 to 65 wt%, a proportion of the copolymer (A4) is from 5 to 30 wt%, and a proportion of the aliphatic-aromatic polyester resin (B) is from 5 to 30 wt%.

### [Item 2]

The resin composition according to item 1, wherein the resin composition exhibits a melt flow rate of 3 to 10 g/10 min at 165 °C.

### [Item 3]

The resin composition according to item 1 or 2, wherein
the poly(3-hydroxyalkanoate) resin (A) further includes:
   a copolymer (A2) of 3-hydroxybutyrate units and other hydroxyalkanoate units, wherein a proportion of the other hydroxyalkanoate units in a total amount of the 3-hydroxybutyrate units and the other hydroxyalkanoate units is from 1 to less than 5 mol%; and
   a copolymer (A3) of 3-hydroxybutyrate units and other hydroxyalkanoate units, wherein a proportion of the other hydroxyalkanoate units in a total amount of the 3-hydroxybutyrate units and the other hydroxyalkanoate units is 24 mol% or more, and
a total proportion of the copolymer (A2) and the copolymer (A3) in the total amount of the poly(3-hydroxyalkanoate) resin (A) and the aliphatic-aromatic polyester resin (B) is from 15 to 55 wt%.

### [Item 4]

The resin composition according to item 3, wherein in a total amount of the copolymer (A2) and the copolymer (A3), a proportion of the copolymer (A2) is 35 wt% or more, and a proportion of the copolymer (A3) is 65 wt% or less.

### [Item 5]

The resin composition according to any one of items 1 to 4, wherein the weight-average molecular weight of the copolymer (A4) is 100 × 10⁴ or more.

### [Item 6]

The resin composition according to any one of items 1 to 5, wherein the aliphatic-aromatic polyester resin (B) is at least one resin selected from the group consisting of polybutylene adipate terephthalate resins, polybutylene sebacate terephthalate resins, and polybutylene succinate terephthalate resins.

### [Item 7]

A molded article containing the resin composition according to any one of items 1 to 6.

### [Item 8]

The molded article according to item 7, wherein the molded article is an injection-molded article.

### Examples

Hereinafter, the present invention will be described in detail with reference to examples. The technical scope of the present invention is not limited by the examples described below.

In Examples and Comparative Examples, the following materials were used.

### [Polyester Resins]

Copolymer (A1): P3HB3HH-1 [poly(3-hydroxybutyrate-co-3-hydroxyhexanoate), average 3HB/3HH ratio = 94.6/5.4 (mol%/mol%), weight-average molecular weight = 36 × 10⁴ g/mol]
Copolymer (A2): P3HB3HH-2 [poly(3-hydroxybutyrate-co-3-hydroxyhexanoate), average 3HB/3HH ratio = 97.2/2.8 (mol%/mol%), weight-average molecular weight = 66 × 10⁴ g/mol]

This resin was produced according to the method described in Example 2 of WO 2019/142845 A1.
Copolymer (A3): P3HB3HH-3 [poly(3-hydroxybutyrate-co-3-hydroxyhexanoate), average 3HB/3HH ratio = 71.8/28.2 (mol%/mol%), weight-average molecular weight = 66 × 10⁴ g/mol]

This resin was produced according to the method described in Example 9 of WO 2019/142845 A1.
Copolymer (A4-1): P3HB3HH-4 [poly(3-hydroxybutyrate-co-3-hydroxyhexanoate), average 3HB/3HH ratio = 89.5/10.5 (mol%/mol%), weight-average molecular weight = 80 × 10⁴ g/mol]
Copolymer (A4-2): P3HB3HH-4 [poly(3-hydroxybutyrate-co-3-hydroxyhexanoate), average 3HB/3HH ratio = 89.5/10.5 (mol%/mol%), weight-average molecular weight = 120 × 10⁴ g/mol]
Aliphatic-aromatic polyester resin (B): Polybutylene adipate terephthalate (PBAT) [Product name: Ecoflex^{™}, Grade: F Blend C1200, manufactured by BASF]

### [Additives]

Additive-1: Behenamide (BNT-22H, manufactured by Nippon Fine Chemical Co., Ltd.)
Additive-2: Pentaerythritol [Neulizer P, manufactured by Mitsubishi Chemical Corporation]

Evaluation procedures carried out in Examples and Comparative Examples will now be described.

### (Preparation of Molding Blend)

The components (A1), (A2), (A3), and (A4) were used in the proportions shown in Table 2. A total of 9 kg (90 wt%) of the components (A1) to (A4), 50 g (0.5 parts by weight) of Additive-1, and 100 g (1 part by weight) of Additive-2 were stirred together using 75 L SuperMixer manufactured by Kawata Mfg. Co., Ltd. at 300 rpm for 3 minutes. In this manner, a molding blend was obtained.

### (Compounding)

TEM-26SS (L/D = 60) manufactured by Toshiba Machine Co., Ltd. was used for compounding. In this machine, the screw configuration, accessory equipment, and barrel set temperature listed in Table 1 were employed, and the screw rotational speed was set to 100 rpm. The molding blend was fed from a main feeder 1 into the upstream end of the screw at a rate of 9.01 kg/hr, while 1 kg (10 wt%) of the component (B) was concurrently fed from a main feeder 2 into the upstream end of the screw at a rate of 0.99 kg/hr. The total weight of the components (A1) to (A4) and the weight of the component (B) were changed as appropriate in accordance with the proportions shown in Table 2.

The strand extruded from the discharge end of the die was solidified by passing the strand through a water bath filled with hot water at 40 to 45 °C, and the solidified strand was then cut using a pelletizer to obtain a compound in the form of pellets.

**[Table 1]**

| Cylinder | Screw configuration | Accessory equipment | Barrel set temperature (°C) |
|---|---|---|---|
| Cylinder 1 (upstream end of screw) | Full-flight | Main feeder 1 | 145 |
| | | Main feeder 2 | |
| Cylinder 2 | Full-flight | | 145 |
| Cylinder 3 | Kneading | | 145 |
| Cylinder 4 | Full-flight | | 145 |
| Cylinder 5 | Full-flight | | 145 |
| Cylinder 6 | Full-flight | | 145 |
| Cylinder 7 | Kneading | | 145 |
| Cylinder 8 | Full-flight | | 145 |
| Die | | | 145 |

### [Sample Preparation and Evaluations]

### <Method for Measuring Weight-Average Molecular Weights of Components (A1) to (A4)>

The weight-average molecular weight of each of the components (A1) to (A4) was measured as follows. The resin to be analyzed was dissolved in chloroform, and the resulting solution was heated in a hot water bath at 60 °C for 0.5 hours. The heated solution was then filtered through a disposable PTFE filter with a pore diameter of 0.2 µm, and the filtrate was subjected to GPC analysis under the conditions listed below.
GPC system: Nexera manufactured by Shimadzu Corporation
Columns: TSKGel GMH_{XL} (two columns), TSKGuard column dH_{XL} (one column) manufactured by Tosoh Corporation
Sample concentration: 3 mg/ml
Eluent: Chloroform solution
Eluent flow rate: 1.0 ml/min
Sample injection amount: 100 µL
Analysis time: 30 minutes
Standard sample: Standard polystyrene

### <Measurement of Melt Flow Rate (MFR) of Resin Composition>

At least 5 g of the compound in pellet form was heated in a melt indexer at 165 °C for 4 minutes in accordance with ISO 1133-1. The melt flow rate (MFR) of the compound was then measured under a load of 5 kg.

### <Preparation of Dumbbell Specimen>

A dumbbell specimen (168 mm length × 20 mm width × 4 mm thickness) was obtained using a dumbbell mold having the dimensions of 168 mm length × 20 mm width × 4 mm thickness and an injection molding machine (Si-100V, manufactured by Toyo Machinery & Metal Co., Ltd.). The barrel temperatures were set to nozzle/T1/T2/T3/T4 = 150/150/150/150/150 °C, and the mold temperature was set to 35 °C.

### <Measurement of Tensile Modulus, Elongation at Break, and Energy to Break>

The dumbbell specimen was allowed to stand at 23 °C for 30 days. Thereafter, the specimen was subjected to a tensile test at 20 mm/min in accordance with ISO 527-1 and ISO 527-2 to measure the tensile modulus, elongation at break, and energy to break.

### <Measurement of Fracture Energy>

The dumbbell specimen was allowed to stand at 23 °C for 30 days. Thereafter, a V-notch having a longitudinal length of 2 mm was formed at the center of the dumbbell specimen. The specimen was subjected to a flexural test at 100 mm/min in accordance with ISO 178-A. As a result, a test force-versus-displacement graph as shown in FIG. 1 was obtained. The fracture energy was determined from the area of the hatched portion under the curve in the obtained graph.

The fracture energy was also measured by the same method for a general-purpose acrylonitrile/butadiene/styrene resin (ABS) known to have high strength. The fracture energy of the ABS resin was 0.76 J.

### <Measurement of Deflection Temperature Under Load>

The dumbbell specimen was allowed to stand at 23 °C for 30 days. Thereafter, the specimen was subjected to a deflection temperature under load test at 0.45 MPa in accordance with ISO 751-1 and ISO 751-2 to measure the deflection temperature under load. A higher deflection temperature under load indicates higher heat resistance.

### <Preparation of Beverage Extraction Capsule>

A beverage extraction capsule (thickness: 0.45 mm) was obtained using a four-cavity coffee capsule mold equipped with a pinpoint gate and a hot runner, and an injection molding machine (Si-100V, manufactured by Toyo Machinery & Metal Co., Ltd.). The barrel temperatures were set to nozzle/T1/T2/T3 = 160/160/160/160 °C, and the mold temperature was set to 40 °C.

### <Evaluation of Deformation and Crack Resistance during Beverage Extraction>

The obtained beverage extraction capsule was filled with finely ground coffee powder for espresso and sealed with an aluminum lid dedicated to the capsule. Coffee was extracted from the capsule using a coffee machine. The presence or absence of deformation and cracking of the capsule during coffee extraction was evaluated according to the following criteria.

### (Deformation)

Good: No deformation of the capsule was observed.

Poor: The capsule was deformed.

### (Cracking)

Good: No cracking occurred over the entire capsule.

Poor: Cracking occurred in the capsule.

### <Pressure Resistance Test>

The coffee extraction hole of the beverage extraction capsule prepared as an evaluation sample was closed with a polyimide film and an adhesive. A metal plate having an air inlet was placed on the capsule, and the air inlet was connected to a compressor. Under these conditions, high-pressure air was applied at 85 °C, and the pressure at which the evaluation sample ruptured was measured. This measurement was conducted for Example 3, Example 6, and Comparative Example 1.

**[Table 2]**

| | | | | Ex. 1 | Ex. 2 | Ex. 3 | Ex. 4 | Ex. 5 | Ex. 6 | Comp. 1 | Ex. 7 | Ex. 8 | Comp. 2 | Ex. 9 | Comp. 3 | Comp. 4 | Comp. 5 |
|---|---|---|---|---|---|---|---|---|---|---|---|---|---|---|---|---|---|
| Formulation | Component (A) | A1 | wt% | 59 | 54 | 49 | 44 | 54 | 59 | 64 | 44 | 34 | 54 | 36 | 56 | 70 | 60 |
| | | A2 | wt% | 13 | 13 | 13 | 13 | 8 | 12 | 13 | 18 | 18 | 18 | 22 | 22 | 15 | 15 |
| | | A3 | wt% | 13 | 13 | 13 | 13 | 8 | 12 | 13 | 18 | 18 | 18 | 22 | 22 | 15 | 15 |
| | | A4-1 | wt% | 5 | 10 | 15 | 20 | 10 | 0 | 0 | 10 | 20 | 0 | 10 | 0 | 0 | 10 |
| | | A4-2 | wt% | 0 | 0 | 0 | 0 | 0 | 7 | 0 | 0 | 0 | 0 | 0 | 0 | 0 | 0 |
| | Component (B) | B | wt% | 10 | 10 | 10 | 10 | 20 | 10 | 10 | 10 | 10 | 10 | 10 | 0 | 0 | 0 |
| | Additives | Additive 1 | parts by weight | 0.5 | 0.5 | 0.5 | 0.5 | 0.5 | 0.5 | 0.5 | 0.5 | 0.5 | 0.5 | 0.5 | 0.5 | 0.5 | 0.5 |
| | | Additive 2 | parts by weight | 1 | 1 | 1 | 1 | 1 | 1 | 1 | 1 | 1 | 1 | 1 | 1 | 1 | 1 |
| | Pellets | MFR | g/10 min | 7.4 | 7.0 | 6.2 | 5.8 | 6.8 | 7.4 | 7.7 | 6.0 | 4.5 | 6.2 | 5.0 | 7.4 | 9.4 | 6.8 |
| | Dumbbell | Tensile modulus | MPa | 906 | 879 | 792 | 844 | 900 | 1114 | 917 | 833 | 754 | 794 | 750 | 997 | 990 | 924 |
| | | Elongation at break | % | 96 | 117 | 142 | 119 | 150 | 152 | 78 | 160 | 170 | 162 | 180 | 148 | 24 | 50 |
| | | Tensile energy to break | J | 72 | 86 | 102 | 84 | 100 | 118 | 60 | 110 | 113 | 117 | 140 | 112 | 22 | 40 |
| Evaluation results | | Fracture energy | J | 0.71 | 0.80 | 0.90 | 0.87 | 1.05 | 0.52 | 0.45 | 1.16 | 1.61 | 0.81 | 1.40 | 0.96 | 0.31 | 0.43 |
| | | Deflection temperature under load | °C | 77 | 76 | 76 | 75 | 75 | 78 | 79 | 74 | 73 | 77 | 72 | 80 | 90 | 82 |
| | Capsule | Deformation | | Good | Good | Good | Good | Good | Good | Poor | Good | Good | Poor | Good | Poor | Poor | Poor |
| | | Cracking | | Good | Good | Good | Good | Good | Good | Good | Good | Good | Good | Good | Poor | Poor | Poor |
| | | Pressure resistance test | MPa | - | 0.33 | - | - | - | 0.46 | 0.27 | - | - | - | - | - | - | - |

Table 2 shows that the resin compositions of Examples 1 to 6 exhibited higher fracture energy than the resin composition of Comparative Example 1, the resin compositions of Examples 7 and 8 exhibited higher fracture energy than the resin composition of Comparative Example 2, and the resin composition of Example 9 exhibited higher fracture energy than the resin compositions of Comparative Examples 3 to 5. This demonstrates that the resin compositions of Examples had high strength. Furthermore, for the resin compositions of Examples, the modulus was not less than 700 MPa, and the elongation at break was not less than 100%. This demonstrates that the resin compositions were capable of deforming over a wide range while maintaining stiffness, and had a practically sufficient balance between strength and toughness. It is also seen that the beverage extraction capsules obtained from the resin compositions of Examples 1 to 9 did not undergo deformation or cracking during beverage extraction. This demonstrates that the capsules resisted deformation and cracking upon heating.

In contrast, in Comparative Examples 1 and 2, in which the resin compositions did not contain the component (A4), the capsules were deformed during beverage extraction. In Comparative Examples 3 and 4, in which the resin compositions contained neither the component (A4) nor the component (B), and in Comparative Example 5, in which the resin composition did not contain the component (B), the capsules were deformed during beverage extraction, and cracking also occurred. These results of Comparative Examples demonstrate that resistance to deformation and cracking upon heating requires the combined use of the component (A4) and the component (B).

For Comparative Examples 1, 4, and 5, it is also seen that the fracture energy was low and the strength was insufficient.

## Claims

1. A resin composition comprising polyester resin components, wherein
the polyester resin components comprise a poly(3-hydroxyalkanoate) resin (A) and an aliphatic-aromatic polyester resin (B),
the poly(3-hydroxyalkanoate) resin (A) comprises:
a copolymer (A1) of 3-hydroxybutyrate units and other hydroxyalkanoate units, wherein a proportion of the other hydroxyalkanoate units in a total amount of the 3-hydroxybutyrate units and the other hydroxyalkanoate units is from 5 to less than 24 mol%, the copolymer (A1) having a weight-average molecular weight of less than 70 × 10⁴; and
a copolymer (A4) of 3-hydroxybutyrate units and other hydroxyalkanoate units, wherein a proportion of the other hydroxyalkanoate units in a total amount of the 3-hydroxybutyrate units and the other hydroxyalkanoate units is from 5 to less than 24 mol%, the copolymer (A4) having a weight-average molecular weight of 70 × 10⁴ or more, and
in a total amount of the poly(3-hydroxyalkanoate) resin (A) and the aliphatic-aromatic polyester resin (B), a proportion of the copolymer (A1) is from 25 to 65 wt%, a proportion of the copolymer (A4) is from 5 to 30 wt%, and a proportion of the aliphatic-aromatic polyester resin (B) is from 5 to 30 wt%.

2. The resin composition according to claim 1, wherein the resin composition exhibits a melt flow rate of 3 to 10 g/10 min at 165 °C.

3. The resin composition according to claim 1 or 2, wherein
the poly(3-hydroxyalkanoate) resin (A) further comprises:
a copolymer (A2) of 3-hydroxybutyrate units and other hydroxyalkanoate units, wherein a proportion of the other hydroxyalkanoate units in a total amount of the 3-hydroxybutyrate units and the other hydroxyalkanoate units is from 1 to less than 5 mol%; and
a copolymer (A3) of 3-hydroxybutyrate units and other hydroxyalkanoate units, wherein a proportion of the other hydroxyalkanoate units in a total amount of the 3-hydroxybutyrate units and the other hydroxyalkanoate units is 24 mol% or more, and
a total proportion of the copolymer (A2) and the copolymer (A3) in the total amount of the poly(3-hydroxyalkanoate) resin (A) and the aliphatic-aromatic polyester resin (B) is from 15 to 55 wt%.

4. The resin composition according to claim 3, wherein in a total amount of the copolymer (A2) and the copolymer (A3), a proportion of the copolymer (A2) is 35 wt% or more, and a proportion of the copolymer (A3) is 65 wt% or less.

5. The resin composition according to claim 1 or 2, wherein the weight-average molecular weight of the copolymer (A4) is 100 × 10⁴ or more.

6. The resin composition according to claim 1 or 2, wherein the aliphatic-aromatic polyester resin (B) is at least one resin selected from the group consisting of polybutylene adipate terephthalate resins, polybutylene sebacate terephthalate resins, and polybutylene succinate terephthalate resins.

7. A molded article comprising the resin composition according to claim 1 or 2.

8. The molded article according to claim 7, wherein the molded article is an injection-molded article.
